# DEMANDE DE BREVET EUROPEEN

(11) **EP 0 549 427 A1**
(43) Date de publication de la demande: **30.06.1993**
(21) Numéro de dépôt: 92403452.3
(22) Date de dépôt: 17.12.1992
(51) Int. Cl.: H02K 1/27, H02K 29/08

(54) **Rotor de machine magnéto-dynamique présentant au moins une zone aimantée et machine magnéto-dynamique, comme un moteur sans collecteur, ainsi équipée**

(30) Priorité: 20.12.1991 FR 9115919
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor de machine magnéto-dynamique qui présente au moins une zone aimantée. Elle concerne aussi une machine magnétodynamique, comme un moteur sans collecteur, ainsi équipée. Un tel rotor est par exemple destiné à équiper un moteur à commutation électronique.

Selon l'invention, le rotor (12 - 19) comporte un arbre de rotation (19) et un corps rotorique (18) sur lequel est monté un anneau magnétisé par bandes allongées (13 - 15). L'anneau est magnétisé à l'aide d'une machine de magnétisation.

## Description

La présente invention concerne un rotor de machine magnéto-dynamique qui présente au moins une zone aimantée. Elle concerne aussi une machine magnéto- dynamique, comme un moteur sans collecteur, ainsi équipée.

Dans l'art antérieur, on a déjà proposé des rotors qui sont équipés d'au moins un aimant permanent composé d'une paire de pôles magnétiques. Un tel rotor est par exemple destiné à équiper un moteur sans collecteur, comme un moteur à commutation électronique.

De tels rotors sont équipés d'au moins un aimant fixé à un corps rotorique tournant sur un arbre rotorique auquel il transmet le couple moteur exercé. Dans l'art antérieur, le corps rotorique comporte par exemple un logement destiné à recevoir et à positionner chaque aimant permanent. La fabrication du corps rotorique impose que le positionnement des logements soit réalisé avec une bonne précision.

C'est un premier objet de l'invention de fournir un moyen qui ne nécessite pas une telle précision.

D'autre part, chaque aimant permanent est alors constitué sous la forme d'un barreau allongé dont une première face présente une première polarité magnétique et une seconde face opposée présente une seconde polarité magnétique. L'aimant doit être conformé au logement et/ou être collé sur le fond de celui-ci.

C'est un autre objet de l'invention de fournir un moyen pour éviter à avoir à conformer l'aimant permanent qui est souvent réalisé en un matériau difficile à travailler. Dans ces cas difficiles, selon l'art antérieur, le barreau est collé. Mais le collage est un facteur de pollution du rotor lors de sa fabrication. C'est un autre objet de l'invention de fournir un moyen qui ne rende pas nécessaire l'utilisation de colles.

D'autre part, dans l'art antérieur, on s'est posé le problème selon lequel les lignes de flux magnétique devraient ne pas présenter la même géométrie dans tout plan perpendiculaire à l'axe du rotor. Dans ce cas, la géométrie des aimants devient complexe.

C'est un autre objet de l'invention de fournir un moyen simple ne nécessitant pas d'opération particulièrement délicate lors de la fabrication du rotor, pour permettre de former des lignes de flux dont la géométrie change le long de l'axe de rotation du rotor.

En effet, la présente invention concerne un rotor de machine magnéto-dynamique. Elle se caractérise en ce que le rotor comporte un arbre de rotation sur lequel est monté un corps rotorique sur lequel est fixé au moins un anneau réalisé en un matériau magnétique, dont la face externe présente une alternance de zones aimantées de polarités magnétiques alternées.

L'invention concerne aussi une machine magnéto-dynamique, comme un moteur sans collecteur, équipée d'un tel rotor.

D'autres caractéristiques et avantages de la présente invention seront mieux compris à l'aide de la description et des figures annexées qui sont :
La figure 1 : un mode de réalisation d'une machine de magnétisation destinée à aimanter un anneau destiné à un rotor selon l'invention ;
La figure 2 : le schéma d'un premier mode de réalisation d'un rotor selon l'invention ;
La figure 3 : le schéma d'un autre mode de réalisation d'un rotor selon l'invention ;
La figure 4 : le schéma d'un autre mode de réalisation d'un rotor selon l'invention ;
La figure 5 : le schéma d'un autre mode de réalisation d'un rotor selon l'invention ;
La figure 6 : le schéma d'un autre mode de réalisation d'un rotor selon l'invention ;
La figure 7 : le schéma d'un autre mode de réalisation d'un rotor selon l'invention ;
Les figures 8a à 8c : le schéma d'une partie d'une machine magnéto-dynamique dans divers modes de réalisation selon l'invention.

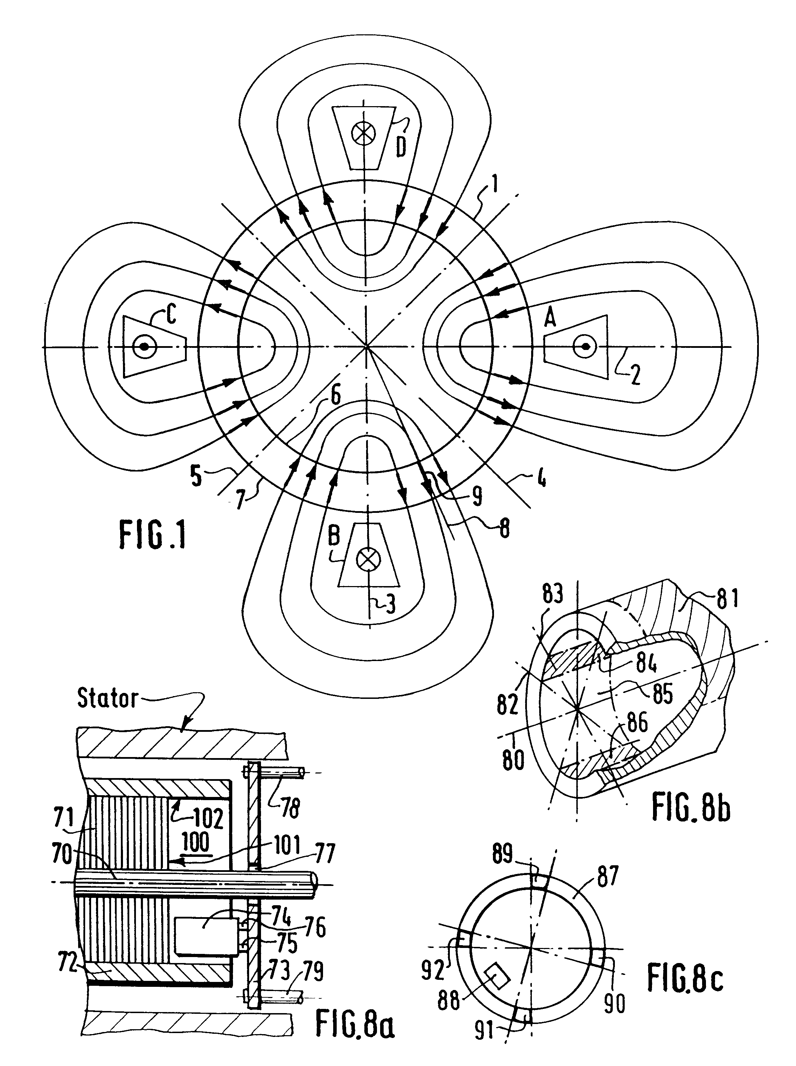

A la figure 1, on a représenté un anneau en matériau magnétique 1 installé sur le plateau d'une machine de magnétisation, représentée de façon schématique. La machine de magnétisation comporte dans un mode de réalisation, quatre têtes de magnétisation A, B, C et D qui sont alimentées par des câbles provenant d'un générateur contrôlé, parties non représentées au dessin puisqu'elles ne sont pas directement concernées par l'invention.

Pour réaliser l'invention, l'anneau 1 reste dans une position déterminée dans laquelle les têtes A, B, C et D lui impriment des polarisations magnétiques convenables le long d'une génératrice du cylindre extérieur de l'anneau.

Les têtes A, B, C et D sont chacune constituées par un conducteur d'une forme prédéterminée dans lequel on fait passer un courant électrique de valeur et de sens correspondants à la magnétisation locale que l'on désire fournir à l'anneau 1. En utilisant un matériau magnétique isotrope comme un alliage Fer- Néodyme- Bore ayant subi un procédé de fabrication destiné à lui fournir son caractère magnétique isotrope, on sait fournir des magnétisations locales importantes de sens déterminés.

Pour réaliser un rotor à deux paires de pôles, on dispose les quatre têtes A, B, C, et D selon quatre génératrices de la face externe 7 de l'anneau 1. Pour réaliser quatre zones magnétiques de polarités alternées sur la face externe 7 de l'anneau 1, on fait passer le courant électrique dans le conducteur de façon à orienter le champ magnétique du matériau dans une direction quasi radiale 9. Dans chaque tête de magnétisation, on a représenté en vue de dessus le sens du courant par une croix dans un rond quand le courant descend dans le conducteur constituant la tête considérée et par un point dans un rond quand le courant monte.

Les lignes de champ magnétisant affectent les formes représentées à la figure 1. Elles sont réparties régulièrement autour de deux axes 2 et 3 qui séparent ainsi l'anneau en quatre zones de polarités magnétiques aimantées successives N et S. Les sens des lignes de champ changent entre les deux axes 4 et 5 qui correspondent au milieu des zones aimantées.

Si on souhaite augmenter le nombre des zones aimantées, il est possible d'augmenter le nombre des têtes de magnétisation, ou de faire tourner la machine de magnétisation pour une nouvelle passe. Le procédé de magnétisation est préférentiellement appliqué avant le montage du rotor de l'invention, mais il peut l'être après, avant l'instalation du rotor dans la machine magnéto-dynamique.

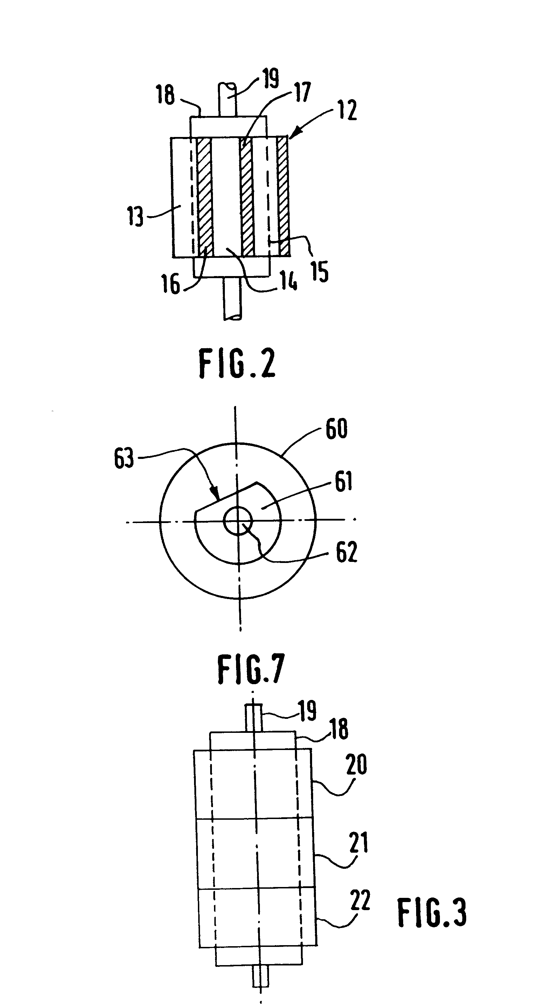

A la figure 2, on a représenté un rotor équipé d'un anneau aimanté à l'aide de la machine de la figure 1. Le rotor comporte un arbre de rotation 19 sur lequel est monté un corps rotorique par des moyens connus. Le corps rotorique présente une périphérie adaptée à recevoir par emmanchement l'anneau aimanté 12.

A la figure 2, on a représenté les zones aimantées en forme de bandes allongées de magnétisation en sortie de la machine de de la figure 1. Les bandes sont préférentiellement constituées par une succession de pôles nord et sud 13, 14, 15. Ces bandes sont séparées par des zones 16 et 17 dont la magnétisation est très faible ou nulle.

A la figure 3, on a représenté un autre mode de réalisation d'un rotor selon l'invention. Le rotor comporte un arbre de rotation 19 et un corps rotorique 18 sur lequel est emmanchée une succession d'anneaux aimantés 20, 21, 22... On constate ainsi qu'il est possible avec une seule dimension standard d'anneau, au moins dans le sens de la longueur le long de l'arbre de rotation du rotor, de réaliser plusieurs dimensions de rotors.

Dans un mode de réalisation, les zones aimantées sont disposées sur le pourtour des faces externes des anneaux avec les mêmes orientations angulaires par rapport à l'axe central commun des anneaux.

Dans un mode de réalisation, les zones aimantées de deux anneaux successifs dans la série des anneaux ne présentent pas les mêmes étendues et/ ou ne sont pas en nombre identiques.

Dans un autre mode de réalisation, des bandes allongées de magnétisation de deux anneaux successifs comme les anneaux 20 et 21 ne se correspondent pas tout à fait de façon à engendrer une variation des géométries des lignes de flux le long de l'axe du l'arbre de rotation 19 du rotor. Dans une telle configuration, les anneaux, par exemple identiques et produits par le même programme de la machine de magnétisation de la figure 8, sont montés avec une déviation angulaire des zones aimantées, déviation angulaire déterminée par rapport à l'axe central de rotation du rotor. Ainsi, une même polarité magnétique présente une inclinaison déterminée

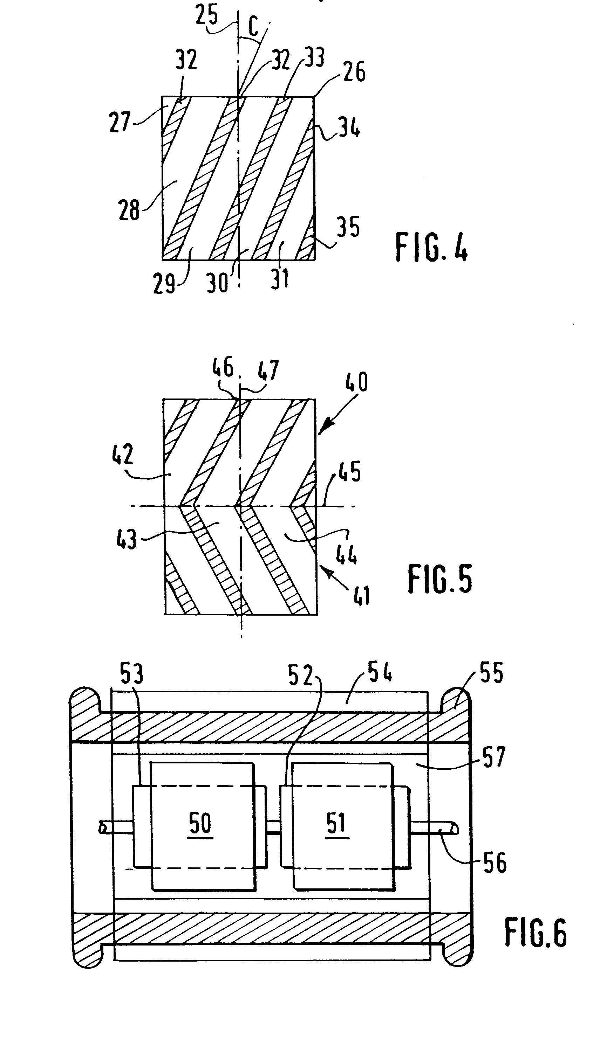

A la figure 4, on a représenté un mode de réalisation d'un anneau aimanté par la machine de la figure 1. Dans un tel mode de réalisation, les têtes de magnétisation sont conçues de façon à produire une géométrie des zones allongées en forme de bandes inclinées sur la face externe cylindrique.

On obtient finalement une succession de bandes inclinées d'un angle C par rapport à l'axe de rotation 25 de l'anneau 26. Les bandes de magnétisation sont successivement 27, 28, 29, 30, et 31 qui sont séparées par des bandes neutres respectivement 32, 33, 34 et 35. Ainsi, on a réalisé aussi un moyen pour faire varier la géométrie des lignes de flux magnétique le long de l'axe de rotation 25.

A la figure 5, on a représenté un mode de réalisation d'un anneau 40 dont les zones aimantées affectent la forme de chevrons 42, 43, 44 de polarités alternées. Chaque chevron peut être produit à l'aide d'une tête de magnétisation de forme adaptée.

Dans un mode de réalisation, représenté à la figure 5, les sommets des chevrons sont sur le même plan 45 orthogonal à l'axe de rotation 47. L'anneau présente alors une symétrie quand les longueurs des deux bras de chaque chevron présentent une même longueur.

Dans un autre mode de réalisation (non représenté aux figures), selon les effets magnétiques que l'on souhaite réaliser, les sommmets des chevrons se trouvent sur un plan qui fait un angle déterminé par rapport à l'axe de rotation 47.

Dans un autre mode de réalisation (non représenté aux figures), pour atteindre d'autres effets magnétiques, les sommets se trouvent sur une courbe gauche.

Dans un autre mode de réalisation (non représenté aux figures), le rotor est constitué par un empilement de deux anneaux 40 et 41, identiques mais montés tête- bêche de part et d'autre du plan orthogonal 45. Quand les deux anneaux sont identiques, il suffit de les monter l'un après l'autre, retournés, de façon à respecter la symétrie des chevrons par rapport au plan 45.

A la figure 6, on a représenté un moteur électrique comportant un stator 54 à l'intérieur duquel est monté, dans le puits statorique 57, une succession 50, 51 de rotors montés sur le même arbre 5 de rotation du moteur. Chaque rotor comporte un anneau magnétique 50, 51 monté sur un corps rotorique 53, 52.

Le stator est équipé avec des bobines 55. En particulier, dans ce mode de réalisation, les bandes allongées magnétisées des anneaux 50 et 51 peuvent être inclinées dans des sens opposés, par exemple pour reproduire les chevrons de la figure 4.

Dans les modes de réalisation indiqués ci-dessus, l'anneau comme l'anneau 12, est emmanché à force sur le corps rotorique. Dans les applications où le couple moteur est important, cette solution n'est pas toujours satisfaisante.

Dans un mode de réalisation limité au cas où les efforts de cisaillement dus au couple mécanique sont faibles, l'anneau est glissé sur le corps rotorique et collé à l'aide d'une résine convenable.

Dans un autre mode de réalisation représenté à la figure 7, l'anneau 60 comporte sur sa face intérieure un méplat 63 destiné à s'adapter sur le méplat correspondant du corps rotorique 61 monté sur l'arbre 62.

Dans d'autres modes de réalisation, le corps rotorique peut présenter plusieurs méplats et en particulier affecter une forme polygonale qui correspond alors à un anneau dont la face intérieure est aussi polygonale, au moins sur une partie de sa hauteur le long de l'axe de rotation.

Aux figures 8a à 8c, on a représenté des modes de réalisation d'une machine magnéto-dynamique selon l'invention.

A la figure 8a, à l'intérieur du stator on a installé un rotor selon l'invention comportant un arbre de rotation 70, sur lequel est monté un corps rotorique 71 autour duquel est fixé un anneau magnétique 72.

L'extrémité représentée à la figure 8a de l'anneau magnétique dépasse au-delà de la face 101 finale du corps rotorique 71. De ce fait, on a constitué un espace vide 100 compris entre la face interne de l'extrémité 102 de l'anneau 71 et de l'arbre rotorique 70. A l'intérieur de cet espace vide 100, on vient loger la partie active d'un capteur 74 destiné à produire un signal représentatif de la position angulaire instantanée du rotor, lors de sa rotation dans la machine.

Le capteur 74 est fixé à une partie du stator. Dans un mode préféré de réalisation, le capteur 74 est un capteur à un capteur à effet Hall dont les broches 76 et 75 sont montées dans des perçages et soudées sur un circuit imprimé 73. Le circuit imprimé 73 présente par exemple un alésage 77 pour laisser passer l'arbre rotorique 70. Le circuit imprimé 73 porte les circuits électroniques de service de la machine magnéto-dynamique, ainsi que les borniers de connexion électrique vers l'extérieur. Le circuit imprimé 73 est monté par l'intermédiaire des jambes 78 et 79 sur un couvercle de fermeture de la machine.

Dans ce mode de réalisation, le défilement des zones aimantées sur la face interne 102 de l'anneau 72, permet de mesurer précisément la position angulaire du rotor. On évite ainsi de perdre la hauteur du capteur 74 le long de l'axe puisque la partie de l'anneau 72 au-dessus de l'espace vide 100 est encore une partie magnétique active.

Un autre avantage de l'invention est d'éviter d'avoir à monter sur le rotor un moyen indicateur de la position angulaire du rotor. En effet, jusqu'à présent, on disposait d'une pluralité de marques magnétiques, optiques ou autres sur le rotor, en relation avec la position des pôles du rotor. L'invention s'affranchit de cette structure compliquée.

A la figure 8b on a représenté une vue en coupe partielle et schématique de l'anneau destiné à la machine de la figure 8a. L'anneau présente un axe de symétrie 80 et une extrémité dont la face extérieure 85 présente des zones aimantées 84 et 86 qui sont réalisées par la machine de magnétisation de la figure 1, et qui peuvent correspondre par les axes 82 et 83 à la position réelle des zones aimantées 81 décrites auparavant. En particulier, certaines zones internes, comme la zone 86, peuvent être décalées par rapport aux autres zones aimantées comme la zone 81, de façon à améliorer la sensibilité de la détection de position angulaire.

A la figure 8c on a représenté un autre mode de réalisation d'un anneau dans lequel, afin de faire une économie de matière, on a découpé les zones de l'extrémité de l'anneau 87 de façon à ne conserver que les quantités de matière strictement nécessaires à la détection de la position angulaire. On a ainsi constitué quatre dents 89-92 qui défilent lors de la rotation du rotor devant la partie active 88 d'un capteur.

Le capteur 88 peut être un capteur optique ou un capteur magnétique comme un capteur à effet Hall.

Dans un autre mode de réalisation, le capteur 88 est du type optronique. En particulier, il utilise la variation de caractéristiques d'un faisceau lumineux intercepté par les dents 89-92. Dans un mode de réalisation préféré, le capteur optronique comporte une cellule émettrice dont le faisceau est destiné à se réfléchir partiellement sur la face en regard de la dent lors de son passage devant le capteur. Le capteur comporte aussi une cellule réceptrice activée par le faisceau réfléchi lors du passage de la dent devant le capteur.

Le rayonnement peut être du type rayon de lumière visible ou encore infrarouge.

## Revendications

1. Rotor de machine magnéto-dynamique, caractérisé en ce qu'il comporte un arbre de rotation (19) sur lequel est monté un corps rotorique (18) sur lequel est fixé au moins un anneau (12) réalisé en un matériau magnétique, dont la face externe présente une alternance de zones aimantées (13, 14, 15, ...) de polarités magnétiques alternées.

2. Rotor selon la revendication 1, caractérisé en ce que les zones aimantées présentent la forme de bandes allongées, constituées par une succession de pôles nord et sud (13, 14, 15), séparées par des zones (16, 17) dont la magnétisation est très faible ou nulle.

3. Rotor selon la revendication 2, caractérisé en ce que les zones allongées présentent la forme de bandes inclinées (27, 28, 29, 30, et 31) sur la face externe cylindrique d'un angle (C) par rapport à l'axe de rotation (25) de l'anneau (26), les bandes de magnétisation étant successivement séparées par des bandes neutres (32, 33, 34 et 35), de façon à faire varier la géométrie des lignes de flux magnétique le long de l'axe de rotation (25).

4. Rotor selon la revendication 2, caractérisé en ce que le rotor comporte un arbre de rotation (19) et un corps rotorique (18) sur lequel est emmanchée une succession d'anneaux aimantés (20, 21, 22, ...).

5. Rotor selon la revendication 4, caractérisé en ce que les zones aimantées sont disposées sur le pourtour des faces externes des anneaux avec les mêmes orientations angulaires par rapport à l'axe central commun des anneaux.

6. Rotor selon la revendication 4, caractérisé en ce que les zones aimantées de deux anneaux successifs dans la série des anneaux ne présentent pas les mêmes étendues et/ ou ne sont pas en nombre identiques.

7. Rotor selon la revendication 4, caractérisé en ce que des bandes allongées de magnétisation de deux anneaux successifs comme les anneaux (20 et 21) ne se correspondent pas tout à fait de façon à engendrer une variation des géométries des lignes de flux le long de l'axe du l'arbre de rotation (19) du rotor, les anneaux, non nécessairement identiques, sont montés avec une déviation angulaire des zones aimantées, déviation angulaire déterminée par rapport à l'axe central de rotation du rotor, de façon à ce qu'une même polarité magnétique présente une inclinaison déterminée.

8. Rotor selon la revendication 2, caractérisé en ce que un anneau (40) présente des zones aimantées affectant la forme de chevrons (42, 43, 44) de polarités alternées.

9. Rotor selon la revendication 8, caractérisé en ce que les sommets des chevrons sont sur le même plan (45) orthogonal à l'axe de rotation (47).

10. Rotor selon la revendication 8, caractérisé en ce que, selon les effets magnétiques que l'on souhaite réaliser, les sommmets des chevrons se trouvent sur un plan qui fait un angle déterminé par rapport à l'axe de rotation (47).

11. Rotor selon la revendication 8, caractérisé en ce que, pour atteindre d'autres effets magnétiques, les sommets des chevrons se trouvent sur une courbe gauche.

12. Rotor selon la revendication 9, caractérisé en ce que, le rotor est constitué par un empilement d'au moins deux anneaux (40 et 41), identiques mais montés tête- bêche de part et d'autre du plan orthogonal (45).

13. Rotor selon la revendication 1, caractérisé en ce que l'anneau (12) est emmanché à force sur le corps rotorique.

14. Rotor selon la revendication 1, caractérisé en ce que l'anneau (12) est glissé sur le corps rotorique et collé à l'aide d'une résine convenable.

15. Rotor selon la revendication 1, caractérisé en ce que l'anneau (60) comporte sur sa face intérieure au moins un méplat (63) destiné à s'adapter sur le méplat correspondant du corps rotorique (61) monté sur l'arbre (62).

16. Rotor selon la revendication 1, caractérisé en ce que le corps rotorique présente une forme polygonale et en ce que le (ou les) anneau (x) qui lui correspond présente une face intérieure polygonale, au moins sur une partie de sa hauteur le long de l'axe de rotation.

17. Rotor selon la revendication 1, caractérisé en ce que l'anneau dépasse au-delà de la face finale (101) du corps rotorique (71) de façon à ménager un espace vide (100) destiné au passage d'un capteur (74) de mesure de la position instantanée du rotor.

18. Rotor selon la revendication 17, caractérisé en ce que le capteur (74) est de type magnétique comme un capteur à effet Hall et détecte les changements de polarité magnétiques des zones aimantées depuis la face interne (102) de l'extrémité de l'anneau (72).

19. Rotor selon la revendication 18, caractérisé en ce que certaines zones aimantées (84,86) de la face interne (102) de l'anneau sont décalées par rapport aux autres zones aimantées comme la zone aimantée principale (81) de la face externe de l'anneau.

20. Rotor selon l'une des revendications 17 à 19, caractérisé en ce que les zones aimantées de détection sur la face interne de l'anneau sont constituées sous forme de dents (89 - 91).

21. Rotor selon l'une des revendications 17 à 20, caractérisé en ce que le capteur (74) est directement monté sur un circuit imprimé (73) fixe par rapport au rotor.

22. Machine magnéto-dynamique, caractérisée en ce qu'elle comporte au moins un rotor selon l'une des revendications précédentes.

23. Machine magnéto-dynamique selon la revendication 22, caractérisée en ce qu'elle comporte un stator (54) à l'intérieur duquel est monté, dans le puits statorique (57), une succession (50,51) de rotors montés sur le même arbre (56) de rotation, chaque rotor comportant au moins un anneau magnétique (50,51) monté sur un corps rotorique (53,52).

24. Machine magnéto-dynamique selon la revendication 22 ou 23, caractérisée en ce qu'elle comporte des anneaux (50,51) dont les zones aimantées présentent des inclinaisons dans des sens opposés, par exemple pour produire des chevrons.
